# EUROPÄISCHE PATENTSCHRIFT

(11) **EP 3 051 258 B1**
(45) Veröffentlichungstag und Bekanntmachung des Hinweises auf die Patenterteilung: **02.06.2021**
(21) Anmeldenummer: 16020021.8
(22) Anmeldetag: 29.01.2016
(51) Int. Cl.: G01C 21/34

(54) **BESTIMMEN EINER ROUTE UNTER VERWENDUNG EINER ERSTEN NAVIGATIONSEINRICHTUNG UND EINER ZWEITEN NAVIGATIONSEINRICHTUNG**
DETERMINATION OF A ROUTE USING A FIRST AND A SECOND NAVIGATION DEVICE
DÉTERMINATION D'UN ITINÉRAIRE À L'AIDE D'UN PREMIER SYSTÈME DE NAVIGATION ET D'UN SECOND SYSTÈME DE NAVIGATION

(30) Priorität: 30.01.2015 DE 102015001469
(43) Veröffentlichungstag der Anmeldung: 03.08.2016
(73) Patentinhaber: JOYNEXT GmbH, 01156 Dresden (DE)
(72) Erfinder: Porstmann, Frank, 01705 Freital (DE); Ulbricht, Dirk, 01099 Dresden (DE); Kahlenbach, Andreas, 01159 Dresden (DE); Lietz, Holger, 09126 Chemnitz (DE)

(56) Entgegenhaltungen:
- DE-T2-602005 001 841
- US-A1- 2005 222 756
- US-A1- 2007 168 118
- US-A1- 2009 276 154
- US-A1- 2014 129 143

## Beschreibung

Die Erfindung betrifft ein Verfahren zum Bestimmen einer Route unter Verwendung einer ersten Navigationseinrichtung und einer zweiten Navigationseinrichtung und eine Navigationsanordnung mit einer ersten Navigationseinrichtung und einer zweiten Navigationseinrichtung zum Ausführen des Verfahrens.

Eine herkömmliche Navigationseinrichtung ist in der Lage, eine Route zu berechnen, die von einer aktuellen Position der Navigationseinrichtung zu einer Zielposition führt. Die Position der Navigationseinrichtung wird meist unter Verwendung eines Satellitennavigationssystems bestimmt, beispielsweise mittels GPS, GLONASS, COMPASS oder GALILEO. Die Zielposition wird in der Regel aus einem Ziel abgeleitet, das ein Benutzer der Navigationseinrichtung über eine Bedieneinheit in die Navigationseinrichtung eingibt. Alternativ dazu kann die Zielposition auch geschätzt werden, beispielsweise aus einer Fahrhistorie.

Die Route kann unter Verwendung einer Recheneinheit der Navigationseinrichtung berechnet werden. Für diese Routenberechnung werden Landkartendaten verwendet, die in der Regel in einer nichtflüchtigen Speichereinheit der Navigationseinrichtung gespeichert sind, beispielsweise auf einer CD-ROM, auf einer Festplatte oder in einem Flash-Speicher. Die Landkartendaten repräsentieren geografische Objekte und diesen zugeordnete Informationen, beispielsweise Straßen, Wege, Plätze, Eisenbahnlinien, Flüsse, Gebäude, Brücken, Geländeformen, Landesgrenzen, Parkmöglichkeiten, Raststätten, Ortschaften, Verkehrsregelungen und Geschwindigkeitsbegrenzungen.

Neben der Routenberechnung kann die Recheneinheit auch für andere Aufgaben eingesetzt werden, beispielsweise für das Darstellen von Grafiken auf einem Berührungsbildschirm der Navigationseinrichtung.

Nach der Routenberechnung kann die Route oder ein Abschnitt der Route auf einem der Navigationseinrichtung zugeordneten Bildschirm angezeigt werden. Dadurch kann der Benutzer eine räumliche Vorstellung von der Route oder von einem vor ihm liegenden Routenabschnitt entwickeln. Das ermöglicht dem Benutzer beispielsweise, Fahrmanöver vorausschauend zu planen.

Ferner kann nach der Routenberechnung eine Zielführung gestartet werden. Als Zielführung bezeichnet man einen Prozess, der den Benutzer entlang der Route leitet. Während der Zielführung gibt die Navigationseinrichtung optische und/oder akustische Fahranweisungen an den Benutzer aus. Die Fahranweisungen werden von der Recheneinheit unter Berücksichtigung der Route, der Landkartendaten und einer aktuellen Position der Navigationseinrichtung erzeugt und unter Verwendung einer Ausgabeeinheit der Navigationseinrichtung an den Benutzer ausgegeben.

Folgen in einer Fahrzeugkolonne ein Fahrzeug oder mehrere Fahrzeuge einem Führungsfahrzeug, besteht die Gefahr, dass der Fahrer eines folgenden Fahrzeugs ("Folgefahrzeug") das Führungsfahrzeug aus den Augen verliert. Das kann unter anderem dazu führen, dass das Folgefahrzeug ein gemeinsames Ziel der Fahrzeugkolonne nicht oder nicht rechtzeitig erreicht.

Um dies zu vermeiden, kann eine aktuelle Position des Führungsfahrzeugs an das Folgefahrzeug übertragen werden, so dass das Folgefahrzeug in die Lage versetzt wird, dem Führungsfahrzeug zu folgen. Dazu wird an Bord des Folgefahrzeugs eine Route berechnet, welche von der Position des Folgefahrzeugs zur Position des Führungsfahrzeugs verläuft. Anhand der Route werden Fahranweisungen für den Fahrer des Folgefahrzeugs generiert, mit deren Hilfe der Fahrer das Folgefahrzeug zur Position des Führungsfahrzeugs steuern kann. Alternativ dazu kann die Position des Folgefahrzeugs an das Führungsfahrzeug übertragen werden. Anhand der Position wird an Bord des Führungsfahrzeugs eine Route berechnet, welche von der Position des Folgefahrzeugs zur Position des Führungsfahrzeugs verläuft. Die Route wird an das Folgefahrzeug übertragen, wo auf Basis der Route Fahranweisungen für den Fahrer des Folgefahrzeugs generiert werden, mit deren Hilfe der Fahrer das Folgefahrzeug zur Position des Führungsfahrzeugs steuern kann.

Diese Alternativen sind aus US 2009/276154 A1, US 2014/129143 A1, DE 60 2005 001841 T2, US 2007/168118 A1 und US 2005/222756 A1 bekannt.

Beide Alternativen erfordern jeweils eine aufwendige Berechnung einer Route, welche die Position des Folgefahrzeugs mit der Position des Führungsfahrzeugs verbindet. Die Berechnung wird von einer Recheneinheit einer Navigationseinrichtung ausgeführt. Während der Routenberechnung steht die Recheneinheit nicht oder nur eingeschränkt für andere Aufgaben zur Verfügung. Daher erscheint es wünschenswert, den Aufwand einer solchen Routenberechnung zu reduzieren.

Daraus ergibt sich die Aufgabe der Erfindung, ein Verfahren bereitzustellen, mit dem eine Route, auf welcher ein Folgefahrzeug einem Führungsfahrzeug einer Fahrzeugkolonne folgen kann, mit besonders geringem Aufwand bestimmbar ist.

Die Aufgabe wird mit dem erfindungsgemäßen Verfahren zum Bestimmen einer Route unter Verwendung einer ersten Navigationseinrichtung und einer zweiten Navigationseinrichtung A1601EP FB, TechniSat Digital GmbH, Gewerbepark 5, D-01156 Dresden, 29.01.2016, 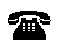 +49 351 45355 6163 gelöst. Die erste Navigationseinrichtung weist eine erste Positionsbestimmungseinheit und eine Datensendeeinheit auf, während die zweite Navigationseinrichtung über eine zweite Positionsbestimmungseinheit, eine Recheneinheit und eine Datenempfangseinheit verfügt.

Das Verfahren weist folgende Schritte auf:
a) Erfassen des Routenverlaufs einer ersten Route, die von der ersten Navigationseinrichtung bis zu einer Routenendposition zurückgelegt wurde, unter Verwendung der ersten Positionsbestimmungseinheit, wobei die Position nur als Routenendposition definiert wird, wenn die folgenden Kriterien i) und ii) erfüllt sind:
   i) seit der letzten Inbetriebnahme der Navigationseinrichtung wurden mindestens m Positionen ermittelt,
   ii) wenn seit der letzten Inbetriebnahme der Navigationseinrichtung eine Routenendposition identifiziert wurde, wurden seit dem letzten Identifizieren einer Routenendposition n weitere Positionen ermittelt,
   wobei n und m ganze Zähle sind und n kleiner als m gewählt wird,
b) Übertragen des Routenverlaufs von der ersten Navigationseinrichtung an die zweite Navigationseinrichtung unter Verwendung der Datensendeeinheit und der Datenempfangseinheit, wobei der Routenverlauf aus m Positionen besteht;
c) Ermitteln einer aktuellen Position der zweiten Navigationseinrichtung unter Verwendung der zweiten Positionsbestimmungseinheit und
d) Bestimmen einer zweiten Route, welche von der Position der zweiten Navigationseinrichtung zu der Routenendposition verläuft, anhand des Routenverlaufs unter Verwendung der Recheneinheit, so dass die zweite Route (zumindest teilweise auf der ersten Route verläuft.

Die Schritte a) bis d) werden für eine weitere Routenendposition erneut ausgeführt, wobei der Routenverlauf der ersten Route von einem beim erneuten Ausführen von Schritt a) erfassten Routenverlauf einer weiteren ersten Route überlappt wird, da n kleiner als m ist.

Demzufolge lässt sich mit dem Verfahren eine zweite Route bestimmen, welche von einer zweiten Navigationseinrichtung zu einer ersten Navigationseinrichtung führt. Auf der zweiten Route kann die zweite Navigationseinrichtung (beziehungsweise ein damit ausgestattetes Folgefahrzeug einer Fahrzeugkolonne) der ersten Navigationseinrichtung (beziehungsweise einem damit ausgestatteten Führungsfahrzeug der Fahrzeugkolonne) folgen.

Erfindungsgemäß wird zum Bestimmen der zweiten Route ein Routenverlauf verwendet, der den Verlauf einer ersten Route repräsentiert, welche von der ersten Navigationseinrichtung zurückgelegt wurde. Der Routenverlauf lässt sich auf einfache Weise gewinnen, nämlich durch Erfassen mehrerer Positionen der ersten Navigationseinrichtung, beispielsweise in bestimmten zeitlichen oder örtlichen Abständen.

Ferner verläuft die zweite Route zumindest teilweise auf der ersten Route. Für diesen Routenabschnitt kann auf eine komplexe Routenberechnung verzichtet werden, so dass die Bestimmung der zweiten Route im Vergleich zu einer herkömmlichen Routenbestimmung insgesamt weniger Aufwand erfordert. Das trifft insbesondere dann zu, wenn sich die zweite Navigationseinrichtung bereits auf der ersten Route befindet. In diesem Fall lässt sich die zweite Route als ein Routenabschnitt der ersten Route bestimmen, was mit besonders wenig Aufwand verbunden ist.

Somit lässt sich die zweite Route, auf welcher das Folgefahrzeug dem Führungsfahrzeug folgen kann, mit besonders geringem Aufwand bestimmen.

Die Aufgabe wird außerdem mit einer Navigationsanordnung gemäß der Erfindung gelöst, welche folgende Bestandteile aufweist:
eine erste Navigationseinrichtung mit einer ersten Positionsbestimmungseinheit, die zum Erfassen des Routenverlaufs einer ersten Route, die von der ersten Navigationseinrichtung bis zu einer Routenendposition zurückgelegt wird, eingerichtet ist, und einer Datensendeeinheit, die zum Senden des Routenverlaufs von der ersten Navigationseinrichtung an eine zweite Navigationseinrichtung eingerichtet ist, und
die zweite Navigationseinrichtung mit einer Datenempfangseinheit, die zum Empfangen des Routenverlaufs eingerichtet ist, einer zweiten Positionsbestimmungseinheit, die zum Ermitteln einer aktuellen Position der zweiten Navigationseinrichtung eingerichtet ist, und einer Recheneinheit, die zum Bestimmen einer zweiten Route, welche von der Position der zweiten Navigationseinrichtung zu der Routenendposition verläuft, anhand des Routenverlaufs, so dass die zweite Route zumindest teilweise auf der ersten Route verläuft, eingerichtet ist.

Weitere Ausführungsformen der Erfindung sind in den abhängigen Patentansprüchen beschrieben.

Die Erfindung wird nun Bezug nehmend auf die folgenden Figuren näher erläutert:
Die Figuren 1 und 2 zeigen jeweils eine schematische Darstellung einer Navigationsanordnung.
Figur 3 zeigt ein Blockschema einer Navigationseinrichtung gemäß einer Ausführungsform der Erfindung.
Die Figuren 4 und 5 zeigen jeweils eine Draufsicht auf eine Route zum Erläutern einer Ausführungsform des erfindungsgemäßen Verfahrens.

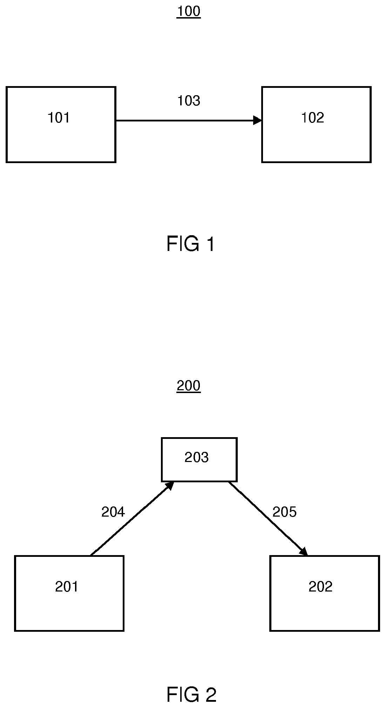

Im Folgenden wird die Erfindung Bezug nehmend auf **Figur 1** näher erläutert, welche eine schematische Darstellung einer Navigationsanordnung 100 gemäß einer Ausführungsform der Erfindung zeigt.

Die Navigationsanordnung 100 weist eine erste Navigationseinrichtung 101 und eine zweite Navigationseinrichtung 102 auf. Die erste Navigationseinrichtung 101 ist in einem führenden Fahrzeug (Führungsfahrzeug) einer Fahrzeugkolonne fest eingebaut, während die zweite Navigationseinrichtung 102 in einem Fahrzeug der Fahrzeugkolonne, welches dem Führungsfahrzeug folgt (Folgefahrzeug), fest eingebaut ist. Bei den Fahrzeugen kann es sich um Personenkraftwagen, Lastkraftwagen, Motorräder, Fahrräder, Luftfahrzeuge, Wasserfahrzeuge oder um eine andere Art von Fahrzeugen handeln.

Alternativ dazu kann jede oder eine der Navigationseinrichtungen 101, 102 in oder an dem jeweiligen Fahrzeug so abgelegt oder angebracht sein, dass sie leicht aus dem Fahrzeug beziehungsweise von dem Fahrzeug entnommen werden können. Als eine weitere Alternative kann jede oder eine der Navigationseinrichtungen 101, 102 von einem Benutzer am Körper getragen werden.

Optional können noch weitere Navigationseinrichtungen, die in weiteren Folgefahrzeugen eingebaut sind beziehungsweise von weiteren Benutzern getragen werden, zu der Navigationsanordnung gehören.

Die erste Navigationseinrichtung 101 ist dazu ausgebildet, einen Routenverlauf zu erfassen, welcher den Verlauf einer Route repräsentiert, die von der ersten Navigationseinrichtung 101 von einer Routenstartposition bis zu einer Routenendposition zurückgelegt wurde. Bei der Routenendposition kann es sich um eine aktuelle Position der ersten Navigationseinrichtung 101 handeln. Ferner ist die erste Navigationseinrichtung 101 dazu in der Lage, den Routenverlauf in Form von Daten an die zweite Navigationseinrichtung 102 zu senden. Ferner ist die zweite Navigationseinrichtung 102 dazu ausgebildet, den Routenverlauf von der ersten Navigationseinrichtung 101 zu empfangen und zu verarbeiten.

Eine Übertragung eines Routenverlaufs von der ersten Navigationseinrichtung 101 zu der zweiten Navigationseinrichtung 102 wird in Figur 1 von dem Pfeil 103 symbolisiert. Die Übertragung des Routenverlaufs erfolgt drahtlos, kann jedoch auch drahtgebunden erfolgen. Optional können die beiden Navigationseinrichtungen 101, 102 derart eingerichtet sein, dass sich Daten auch in umgekehrter Richtung, das heißt von der zweiten Navigationseinrichtung 102 zu der ersten Navigationseinrichtung 101 übertragen lassen.

Im Folgenden wird ein Beispiel Bezug nehmend auf **Figur 2** näher erläutert, welche eine schematische Darstellung einer Navigationsanordnung 200 gemäß einer anderen Ausführungsform der Erfindung zeigt.

Die Navigationsanordnung 200 weist eine erste Navigationseinrichtung 201 und eine zweite Navigationseinrichtung 202 auf, welche den Navigationseinrichtungen 101 und 102 aus Figur 1 entsprechen. Optional können noch weitere Navigationseinrichtungen zu der Navigationsanordnung gehören.

Zusätzlich weist die Navigationsanordnung 200 einen Server 203 auf, welcher Daten von der ersten Navigationseinrichtung 201 empfangen und Daten an die zweite Navigationseinrichtung 202 senden kann. Das Übertragen der Daten von der ersten Navigationseinrichtung 201 an den Server 203 wird von einem ersten Pfeil 204 symbolisiert und das Übertragen der Daten von dem Server 203 an die zweite Navigationseinrichtung 202 wird von einem zweiten Pfeil 205 symbolisiert. Unter anderem kann der Server 203 einen Routenverlauf von der ersten Navigationseinrichtung 201 empfangen und an die zweite Navigationseinrichtung 202 weiterleiten.

Optional kann der Server 203 den Routenverlauf auch an weitere Navigationseinrichtungen weiterleiten, die beispielsweise in anderen Folgefahrzeugen der Fahrzeugkolonne eingebaut sind. Als eine weitere Option kann der Server 203 einen empfangenen Routenverlauf, beziehungsweise die Daten, welche den Routenverlauf repräsentieren, vor seiner beziehungsweise ihrer Weiterleitung zwischenspeichern und/oder verarbeiten.

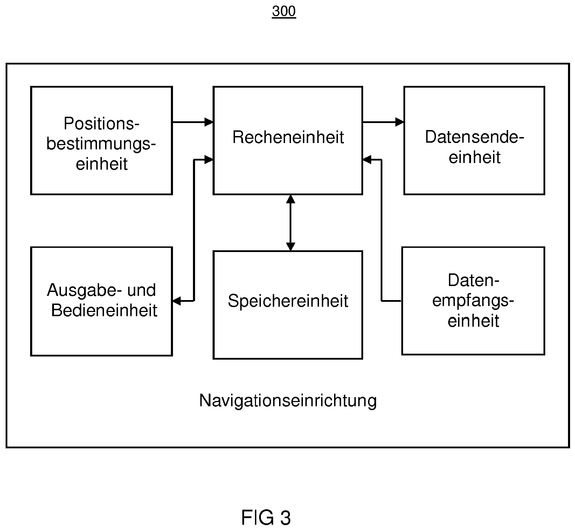

Im Folgenden wird die Erfindung Bezug nehmend auf **Figur 3** näher erläutert, welche ein Blockschema einer Navigationseinrichtung 300 gemäß einer Ausführungsform der Erfindung zeigt.

Die Navigationseinrichtung 300 ist in einem Fahrzeug fest eingebaut. Alternativ dazu kann die Navigationseinrichtung auch als tragbares Gerät in einem Fahrzeug mitgeführt werden oder von einem Benutzer, der ohne Fahrzeug unterwegs ist, getragen werden, beispielsweise an seinem Körper.

Die Navigationseinrichtung 300 ist derart ausgebildet, dass sie die Funktion sowohl der ersten Navigationseinrichtung 101, 201 als auch der zweiten Navigationseinrichtung 102, 202 aus den Figuren 1 und 2 übernehmen kann. Zu diesem Zweck verfügt die Navigationseinrichtung 300 über folgende Funktionsmodule: eine Positionsbestimmungseinheit, eine Recheneinheit, eine Speichereinheit, eine Datensendeeinheit, eine Empfangseinheit und eine Ausgabe- und Bedieneinheit. Neben den genannten Funktionsmodulen kann die Navigationseinrichtung 300 noch weitere Funktionsmodule aufweisen, beispielsweise eine Schnittstelleneinheit.

Bei der Positionsbestimmungseinheit handelt es sich um einen GPS-Empfänger, der mit einer Satellitenempfangsantenne in Form einer GPS-Antenne (nicht gezeigt) ausgestattet ist. Die Positionsbestimmungseinheit kann Positionskoordinaten, welche eine geografische Position der Navigationseinrichtung 300 repräsentieren, aus Satellitensignalen gewinnen und an die Recheneinheit übermitteln. Zu diesem Zweck ist die Positionsbestimmungseinheit über eine Datenverbindung mit der Recheneinheit verbunden.

Bei einer anderen Ausführungsform der Erfindung wird anstelle des GPS-Empfängers eine andere Art von Positionsbestimmungseinheit verwendet, beispielsweise ein GALILEO-Empfänger oder ein GLONASS-Empfänger.

Die Positionsbestimmungseinheit ist zum Erfassen des Routenverlaufs einer ersten Route, die von der Navigationseinrichtung 300 bis zu einer Routenendposition zurückgelegt wird, eingerichtet. Dazu erfasst die Positionsbestimmungseinheit die Positionskoordinaten mehrerer Positionen der Navigationseinrichtung 300 und übergibt diese an die Recheneinheit, welche die Positionskoordinaten in der Speichereinheit speichert.

Die Recheneinheit ist die zentrale Steuerungseinheit der Navigationseinrichtung 300. Sie verfügt neben einem Prozessor (CPU, Central Processing Unit) über einen Arbeitsspeicher (RAM, Random Access Memory), der zum flüchtigen Speichern von Variablen und Zwischenergebnissen dient. Der Prozessor und der Arbeitsspeicher sind auf einem integrierten Schaltkreis vereinigt. Alternativ dazu können der Prozessor und der Arbeitsspeicher separat voneinander angeordnet sein, beispielsweise jeweils auf einem anderen integrierten Schaltkreis.

Die Recheneinheit ist unter anderem zum Bestimmen einer Route, die von einer Startposition zu einer Zielposition führt, in der Lage. Weiterhin kann die Recheneinheit ausgehend von einer Route und einer aktuellen Position der Navigationseinrichtung 300 eine Fahranweisung erzeugen und die Fahranweisung über eine Datenverbindung an die Ausgabe- und Bedieneinheit übertragen.

Insbesondere ist die Recheneinheit zum Bestimmen einer Route in der Lage, die von einer aktuellen Position der Navigationseinrichtung 300 zu einer Routenendposition führt, welche von einer anderen Navigationseinrichtung erreicht wurde. Die Route wird derart bestimmt, dass sie zumindest teilweise auf einer Route verläuft, die von der anderen Navigationseinrichtung bis zu der Routenendposition zurückgelegt wurde. Dazu wird neben Landkartendaten ein Routenverlauf verwendet, welcher den Verlauf der Route repräsentiert, die von der anderen Navigationseinrichtung zurückgelegt wurde.

Die Recheneinheit ist mit der Speichereinheit über eine bidirektionale Datenverbindung verbunden. Die Speichereinheit verfügt über einen nichtflüchtigen Speicher in Form eines EEPROMs (Electrically Erasable Programmable Read-Only Memory). Alternativ dazu kann die Speichereinheit auch einen anderen Speicher aufweisen, beispielsweise einen Flash-EEPROM oder eine Festplatte. Ferner kann die Speichereinheit über mehrere der genannten Speicher verfügen.

In der Speichereinheit ist unter anderem eine Landkartendatenbank gespeichert, welche eine Vielzahl von Landkartendaten enthält. Die Landkartendaten repräsentieren Objekte, die sich in einem bestimmten geografischen Gebiet befinden. Zu den Objekten zählen Straßen, Wege, Plätze, Eisenbahnlinien, Flüsse, Gebäude, Brücken, Geländeformen, Landesgrenzen, Parkmöglichkeiten, Raststätten, Verkehrsregelungen und Ortschaften. Zusätzlich lassen sich in der Speichereinheit Positionen der Navigationseinrichtung 300 in Form von Positionskoordinaten speichern.

Ferner ist die Recheneinheit über eine Datenverbindung mit der Datensendeeinheit verbunden. Die Datensendeeinheit kann Daten drahtlos an eine andere Navigationseinrichtung oder an einen Server senden, beispielsweise über eine Funkverbindung. Zu diesem Zweck ist die Datensendeeinheit mit einer geeigneten Sendeantenne, beispielsweise mit einer Mobilfunkantenne, ausgestattet. Zu den Daten gehört insbesondere ein Routenverlauf, welcher den Verlauf einer Route repräsentiert, die von der Navigationseinrichtung 300 zurückgelegt wurde.

Bei einer anderen Ausführungsform der Erfindung sendet die Datensendeeinheit die genannten Daten auf eine andere Art, beispielsweise drahtgebunden, an die andere Navigationseinrichtung.

Weiterhin ist die Recheneinheit über eine Datenverbindung mit der Datenempfangseinheit verbunden. Die Datenempfangseinheit kann Daten drahtlos von einer anderen Navigationseinrichtung oder von einem Server empfangen, beispielsweise über eine Funkverbindung. Zu diesem Zweck ist die Datensendeeinheit mit einer geeigneten Empfangsantenne, beispielsweise mit einer Mobilfunkantenne, ausgestattet. Zu den Daten gehört insbesondere ein Routenverlauf, welcher den Verlauf einer Route repräsentiert, die von der anderen Navigationseinrichtung zurückgelegt wurde.

Bei einer anderen Ausführungsform der Erfindung empfängt die Datenempfangseinheit die Daten, insbesondere den Routenverlauf, auf eine andere Art, beispielsweise drahtgebunden. Optional kann die Datenempfangseinheit mit der Datensendeeinheit in einem Datensende- und Datenempfangsmodul vereinigt sein. Ferner können auch die Sendeantenne und die Empfangsantenne in einer Sende- und Empfangsantenne vereinigt sein.

Außerdem ist die Recheneinheit über eine bidirektionale Datenverbindung mit der Ausgabe- und Bedieneinheit verbunden. Die Ausgabe- und Bedieneinheit weist unter anderem einen Berührungsbildschirm, ein Tastenfeld, eine Sprachausgabeeinrichtung mit einem Lautsprecher und eine Spracheingabeeinrichtung mit einem Mikrofon auf. Die Ausgabe- und Bedieneinheit dient unter anderem zum Ausgeben von Umgebungsinformationen, Routeninformationen und Fahranweisungen an einen Benutzer der Navigationseinrichtung 300 und zum Eingeben von Bedienbefehlen und Zielen in die Navigationseinrichtung 300 durch den Benutzer.

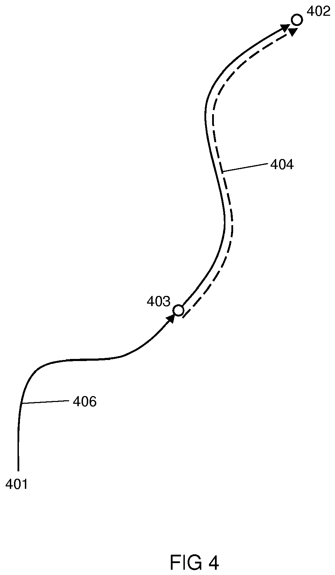

Im Folgenden wird die Erfindung Bezug nehmend auf **Figur 4** näher beschrieben, welche eine Draufsicht auf eine erste Route 401 zum Erläutern einer Ausführungsform des erfindungsgemäßen Verfahrens zeigt.

Das Verfahren wird unter Verwendung einer Navigationsanordnung ausgeführt, welche eine erste Navigationseinrichtung und eine zweite Navigationseinrichtung aufweist. Die erste Navigationseinrichtung ist in einem Führungsfahrzeug einer Fahrzeugkolonne eingebaut und entspricht hinsichtlich ihrer Funktion und ihres Aufbaus der oben erläuterten Navigationseinrichtung 300. Somit verfügt die erste Navigationseinrichtung unter anderem über eine Positionsbestimmungseinheit und eine Datensendeeinheit.

Die zweite Navigationseinrichtung ist in einem anderen Fahrzeug der Fahrzeugkolonne eingebaut, welches dem Führungsfahrzeug folgt und daher als "Folgefahrzeug" bezeichnet wird. Auch die zweite Navigationseinrichtung entspricht hinsichtlich ihrer Funktion und ihres Aufbaus der oben erläuterten Navigationseinrichtung 300. Somit verfügt die zweite Navigationseinrichtung unter anderem über eine Positionsbestimmungseinheit, eine Recheneinheit und eine Datenempfangseinheit.

Bei einem ersten Verfahrensschritt wird der Routenverlauf der ersten Route 401, die von der ersten Navigationseinrichtung bis zum Erreichen einer Routenendposition 402 zurückgelegt wird, unter Verwendung der Positionsbestimmungseinheit der ersten Navigationseinrichtung erfasst.

Der Routenverlauf wird von m Positionen repräsentiert, an denen sich die erste Navigationseinrichtung zu verschiedenen Zeitpunkten befindet, wobei m eine ganze Zahl ist und fest vorgegeben sein kann. Eine solche Position wird unter Verwendung der Positionsbestimmungseinheit immer dann ermittelt, wenn die erste Navigationseinrichtung einen Routenabschnitt einer bestimmten Länge zurückgelegt hat. Alternativ dazu kann eine solche Position immer dann ermittelt werden, wenn eine bestimmte Zeitspanne vergangen ist.

Als eine weitere Alternative kann eine solche Position immer dann ermittelt werden, wenn die erste Navigationseinrichtung einen Knotenpunkt oder einen Stützpunkt eines Straßennetzes erreicht hat.

Die Positionsbestimmungseinheit überträgt jede der ermittelten Positionen in Form von Positionskoordinaten an die Recheneinheit der ersten Navigationseinrichtung. Die Recheneinheit überträgt die Positionen in die Speichereinheit der ersten Navigationseinrichtung, wo die Positionen gespeichert werden.

Ferner prüft die Recheneinheit für jede der ermittelten Positionen, ob diese die folgenden Kriterien (a) und (b) erfüllt:
(a) Seit der letzten Inbetriebnahme der Navigationseinrichtung wurden mindestens m Positionen ermittelt.
(b) Wenn seit der letzten Inbetriebnahme der Navigationseinrichtung eine Routenendposition identifiziert wurde, wurden seit dem letzten Identifizieren einer Routenendposition n weitere Positionen ermittelt.

Bei den Variablen m und n handelt es sich jeweils um eine ganze Zahl, wobei m einen Wert von 300 und n einen Wert von 60 hat. Alternativ dazu können m und n auch andere Werte annehmen, beispielsweise 100 und 20 oder 600 und 60. Erfüllt eine der Positionen die Kriterien (a) und (b), wird die Position von der Recheneinheit als eine Routenendposition identifiziert.

Im vorliegenden Fall wird eine von der ersten Navigationseinrichtung erreichte Position als die Routenendposition 402 identifiziert. Folglich repräsentieren die Routenendposition 402 und die m-1 davor ermittelten Positionen den Routenverlauf der ersten Route 401.

Bei einem zweiten Verfahrensschritt wird der Routenverlauf der ersten Route 401 unter Verwendung der Datensendeeinheit der ersten Navigationseinrichtung und der Datenempfangseinheit der zweiten Navigationseinrichtung von der ersten Navigationseinrichtung an die zweite Navigationseinrichtung übertragen.

Dazu liest die Recheneinheit die Routenendposition und die m-1 davor ermittelten Positionen aus der Speichereinheit aus und überträgt die ausgelesenen Positionen an die Datensendeeinheit. Ferner sendet die Datensendeeinheit die Positionen an die Datenempfangseinheit der zweiten Navigationseinrichtung, beispielsweise über eine Funkverbindung.

Im vorliegenden Fall werden die Routenendposition und die m-1 davor ermittelten Positionen gemeinsam in einem Datenpaket an die zweite Navigationseinrichtung übertragen, nachdem eine der Positionen als Routenendposition identifiziert wurde. Alternativ dazu kann jede der genannten Positionen separat an die zweite Navigationseinrichtung übertragen werden, unmittelbar nachdem die jeweilige Position ermittelt wurde.

Als eine weitere Alternative ist es möglich, anstelle des Routenverlaufs lediglich eine einzelne Position der ersten Navigationseinrichtung in Form von Daten an die zweite Navigationseinrichtung zu übertragen. Anhand der Position kann die zweite Navigationseinrichtung eine Route bestimmen, auf der die zweite Navigationseinrichtung der ersten Navigationseinrichtung folgen kann.

Als eine weitere Option kann die Datensendeeinheit die Positionen an einen Server übertragen, welcher die Positionen anschließend an die zweite Navigationseinrichtung weiterleitet. Neben den Positionen können noch weitere Informationen über den Server an die zweite Navigationseinrichtung weitergeleitet werden, beispielsweise der Name eines Fahrers, ein Ziel, eine Route, eine Fahrzeuggeschwindigkeit, eine Kraftstoffrestmenge, ein Zwischenziel und/oder eine Aufforderung, dem Führungsfahrzeug zu folgen.

Eine Übertragung derartiger Informationen ist auch in der Gegenrichtung möglich, das heißt von der zweiten Navigationseinrichtung an die erste Navigationseinrichtung. Ferner können eine oder mehrere der Informationen unter Verwendung der Ausgabe- und Bedieneinheit der empfangenden Navigationseinrichtung fahrzeugbezogen dargestellt werden, beispielsweise in Form einer Liste. Eine solche Liste lässt sich zum Besipiel neben einem Symbol des jeweiligen Fahrzeugs in einer Landkartendarstellung anzeigen.

Optional kann die erste Navigationseinrichtung neben dem Routenverlauf eine Aufforderung an die zweite Navigationseinrichtung übertragen, dass das Folgefahrzeug dem Führungsfahrzeug folgen soll. Die Übertragung der Aufforderung kann automatisch oder manuell, mittels einer entsprechenden Eingabe des Fahrers des Führungsfahrzeugs in die erste Navigationseinrichtung, ausgelöst werden. Der Fahrer des Folgefahrzeugs kann die Aufforderung durch eine entsprechende Eingabe in die zweite Navigationseinrichtung annehmen. Das heißt, der Fahrer des Folgefahrzeugs bestätigt, dass er der Aufforderung nachkommen möchte. Die Bestätigung kann an die erste Navigationseinrichtung gesendet und dem Fahrer des Führungsfahrzeugs angezeigt werden. Ferner ist es möglich, dass die weiteren Verfahrensschritte nur dann ausgeführt werden, wenn die Aufforderung von dem Folgefahrzeug oder von dem Fahrer des Folgefahrzeugs angenommen wurde.

Als eine weitere Option kann die erste Navigationseinrichtung neben dem Routenverlauf einen Punkt von Interesse (engl. POI: point of interest) an die zweite Navigationseinrichtung übertragen. Ein solcher Punkt kennzeichnet beispielsweise eine Gefahrenstelle oder eine Geschwindigkeitsmesseinrichtung. Der Punkt kann manuell erzeugt werden, indem der Fahrer des Führungsfahrzeugs während der Fahrt eine Eingabe in die erste Navigationseinrichtung vornimmt, beispielsweise in Form eines Tastendrucks oder in Form einer Berührung seines Berührungsbildschirms. Alternativ dazu kann der Punkt auch automatisch erzeugt werden, beispielsweise indem ein Fahrerassistenzsystem oder ein Sicherheitssystem des Führungsfahrzeugs oder eines anderen Fahrzeugs aktiviert wird, zum Beispiel ein Antiblockiersystem oder ein elektronisches Stabilitätsprogramm.

Bei einem dritten Verfahrensschritt wird unter Verwendung der Positionsbestimmungseinheit eine aktuelle Position 403 der zweiten Navigationseinrichtung ermittelt.

Die Positionsbestimmungseinheit überträgt die ermittelte Position 403, welche auf der ersten Route 401 angeordnet ist, in Form von Positionskoordinaten an die Recheneinheit der zweiten Navigationseinrichtung. Die Bestimmung der Position 403 wird durch den Empfang des Routenverlaufs bewirkt, kann aber auch unabhängig davon erfolgen.

Bei einem vierten Verfahrensschritt wird unter Verwendung der Recheneinheit der zweiten Navigationseinrichtung eine zweite Route 404, welche von der aktuellen Position 403 der zweiten Navigationseinrichtung zu der Routenendposition 402 verläuft, bestimmt. Die zweite Route 404 wird anhand des Routenverlaufs der ersten Route 401 derart bestimmt, dass die zweite Route 404 vollständig auf der ersten Route 401 verläuft. Das ist möglich, weil sich die zweite Navigationseinrichtung im vorliegenden Fall auf der ersten Route 401 befindet.

Da die zweite Route 404 vollständig auf der ersten Route 401 verläuft, lässt sich die zweite Route 404 mit besonders geringem Aufwand bestimmen, nämlich als ein Abschnitt der ersten Route 401. Im Einzelnen lässt sich die zweite Route 404 bestimmen, indem die erste Route 401 um ihren bis vor die Position 403 verlaufenden Abschnitt 406 verkürzt wird.

Die zweite Route 404 wird dem Fahrer des Folgefahrzeugs unter Verwendung der Ausgabe- und Bedieneinheit der zweiten Navigationseinrichtung angezeigt, beispielsweise auf dem Berührungsbildschirm der zweiten Navigationseinrichtung. Dadurch kann der Fahrer eine räumliche Vorstellung von der zweiten Route 404 entwickeln.

Außerdem wird unter Verwendung der Recheneinheit der zweiten Navigationseinrichtung eine Zielführung ausgeführt, welche auf der zweiten Route 404 und auf Landkartendaten basiert, die in der Speichereinheit der zweiten Navigationseinrichtung gespeichert sind. Die bei der Zielführung über die Ausgabe- und Bedieneinheit der zweiten Navigationseinrichtung an den Fahrer des Folgefahrzeugs ausgegebenen Fahranweisungen ermöglichen dem Fahrer des Folgefahrzeugs, dem Führungsfahrzeug zu folgen.

Im vorliegenden Fall wird die Zielführung automatisch gestartet, sobald die zweite Route 404 bestimmt wurde. Alternativ dazu ist es möglich, dass die Zielführung erst dann gestartet wird, nachdem ein unter Verwendung der ersten Navigationseinrichtung automatisch oder manuell erzeugtes Startsignal an die zweite Navigationseinrichtung übertragen wurde.

Nach dem Erreichen der Routenendposition 402 setzt das Führungsfahrzeug seine Fahrt fort, wobei weitere Routenverläufe auf die oben beschriebene Weise erfasst und an das Folgefahrzeug beziehungsweise an die darin eingebaute zweite Navigationseinrichtung übertragen werden. Dazu ermittelt die Positionsbestimmungseinheit der ersten Navigationseinrichtung weitere Positionen, die in der Speichereinheit der ersten Navigationseinrichtung gespeichert werden. Erfüllt eine der Positionen die oben genannten Kriterien (a) und (b), wird die Position als Routenendposition identifiziert, wobei die Routenendposition und die m-1 davor ermittelten Positionen den zu übertragenden Routenverlauf repräsentieren.

Somit wird alle n von der ersten Navigationseinrichtung erreichten Positionen ein Routenverlauf an die zweite Navigationseinrichtung übertragen. Folglich werden während der Fahrt des Führungsfahrzeugs mehrere Routenverläufe an die zweite Navigationseinrichtung übertragen.

Da im vorliegenden Fall n kleiner als m gewählt wurde, überlappen sich die von den Routenverläufen repräsentierten Routen. Alternativ dazu ist es jedoch auch möglich, n gleich m oder n größer als m zu wählen, so dass sich die Routen nicht überlappen.

Ferner wird jedes Mal, wenn die zweite Navigationseinrichtung einen Routenverlauf von der ersten Navigationseinrichtung empfangen hat, eine aktuelle Position der zweiten Navigationseinrichtung unter Verwendung der Positionsbestimmungseinheit der zweiten Navigationseinrichtung bestimmt. Außerdem wird unter Verwendung der Recheneinheit der zweiten Navigationseinrichtung eine Route, welche von einer aktuellen Position der zweiten Navigationseinrichtung zu der Routenendposition verläuft, bestimmt.

Auf diese Weise werden während der Fahrt des Folgefahrzeugs mehrere Routen bestimmt, auf denen das Folgefahrzeug dem Führungsfahrzeug folgen kann. Mit anderen Worten wird die Route, auf welcher das Folgefahrzeug dem Führungsfahrzeug folgen kann, während der Fahrt zyklisch an die Positionen beider Fahrzeuge angepasst. Dementsprechend wird auch die auf der Route basierende Zielführung der zweiten Navigationseinrichtung während der Fahrt zyklisch angepasst.

Optional können zu der Fahrzeugkolonne noch weitere Folgefahrzeuge gehören, die jeweils mit einer Navigationseinrichtung ausgestattet sind, welche hinsichtlich ihrer Funktion und ihres Aufbaus der oben erläuterten Navigationseinrichtung 300 entspricht. In diesem Fall kann der Routenverlauf der Route 401 neben der zweiten Navigationseinrichtung auch an die Navigationseinrichtungen der weiteren Folgefahrzeuge übertragen werden. Daraufhin können diese Navigationseinrichtungen den dritten Verfahrensschritt, den vierten Verfahrensschritt und die darauf folgenden Aktivitäten auf die gleiche Weise wie die zweite Navigationseinrichtung ausführen.

Als eine weitere Option kann die Führung der Fahrzeugkolonne von dem bisherigen Führungsfahrzeug an ein bisheriges Folgefahrzeug übergeben werden. In diesem Fall wird das bisherige Folgefahrzeug zum neuen Führungsfahrzeug und das bisherige Führungsfahrzeug wird zum neuen Folgefahrzeug. Ferner übernimmt die Navigationseinrichtung des neuen Führungsfahrzeugs die Funktion der ersten Navigationseinrichtung und die Navigationseinrichtung des neuen Folgefahrzeugs übernimmt die Funktion der zweiten Navigationseinrichtung.

Die Übergabe der Führung kann manuell, von den Fahrern beider Fahrzeuge, durchgeführt werden. Dazu können die Fahrer Eingaben auf Tastenfeldern vornehmen, die auf den Berührungsbildschirmen ihrer Navigationseinrichtungen angezeigt werden. Alternativ dazu kann die Führung auch automatisch übergeben werden, beispielsweise, wenn festgestellt wird, dass das bisherige Folgefahrzeug ein gemeinsames Ziel früher als das bisherige Führungsfahrzeug erreichen kann. Zur Übergabe der Führung wird eine zwischen beiden Fahrzeugen bestehende Datenverbindung verwendet, beispielsweise eine Funkverbindung.

Neben den zur Übergabe der Führung erforderlichen Informationen können noch weitere Informationen zwischen den Fahrzeugen ausgetauscht werden, die sich beispielsweise auf die Teilnahme an einer Fahrzeugkolonne oder auf gemeinsame Zwischenstops beziehen. Bei den Zwischenstops handelt es sich um Orte, an denen sich mehrere Fahrzeuge einer Fahrzeugkolonne treffen, was eine vorherige Abstimmung der Fahrer der Fahrzeuge erfordert.

Bei einer solchen Abstimmung ist es vorteilhaft, jedem der Fahrer den geplanten Zwischenstop auf einer Landkarte anzuzeigen, die auf dem Berührungsbildschirm seiner Navigationseinrichtung dargestellt wird. Der Fahrer kann dann entscheiden, ob er an dem Zwischenstop halten möchte beziehungsweise ob er sich an dem Zwischenstop mit anderen Fahrern treffen möchte, und eine entsprechende Eingabe in seine Navigationseinrichtung vornehmen. Daraufhin kann eine entsprechende Nachricht generiert und an die Navigationseinrichtungen der anderen Fahrzeuge der Fahrzeugkolonne übertragen werden. Ferner kann neben einem Zwischenstop, welcher in der Landkarte eines der Fahrer dargestellt wird, eine Liste aller Fahrzeuge und/oder Fahrer, die an dem Zwischenstop halten möchten, eingeblendet werden. Auf diese Weise können die Fahrer darüber abstimmen, ob an einem Ort ein Zwischenstop eingelegt werden soll beziehungsweise wer an einem Treffen an dem Zwischenstop teilnimmt.

Weiterhin ist es möglich, dass eine Route, auf welcher ein Folgefahrzeug einem Führungsfahrzeug folgen kann, automatisch derart angepasst wird, dass die Route über einen Zwischenstop führt, an dem der Fahrer des Folgefahrzeugs halten möchte.

Bei einer anderen Ausführungsform kann der Fahrer eines Folgefahrzeugs anstelle des Führungsfahrzeugs auch ein anderes Fahrzeug der Fahrzeugkolonne als das Fahrzeug, dem er folgen möchte, auswählen. In diesem Fall wird nach einer entsprechenden Eingabe des Fahrers in seine Navigationseinrichtung eine entsprechende Nachricht an die Navigationseinrichtung des ausgewählten Fahrzeugs gesandt. Das bewirkt, dass die Navigationseinrichtung des ausgewählten Fahrzeugs die Funktion der ersten Navigationseinrichtung bei dem oben beschriebenen Verfahren übernimmt und die Navigationseinrichtung des Fahrzeugs des Fahrers die Funktion der zweiten Navigationseinrichtung bei dem oben beschriebenen Verfahren übernimmt.

Als eine weitere Option kann ein Fahrer der Fahrzeugkolonne eine Eingabe in seine Navigationseinrichtung vornehmen, welche bewirkt, dass eine Sprachverbindung in Form einer Konferenzschaltung, beispielsweise einer telefonischen Konferenzschaltung, zwischen allen Fahrern der Fahrzeugkolonne hergestellt wird.

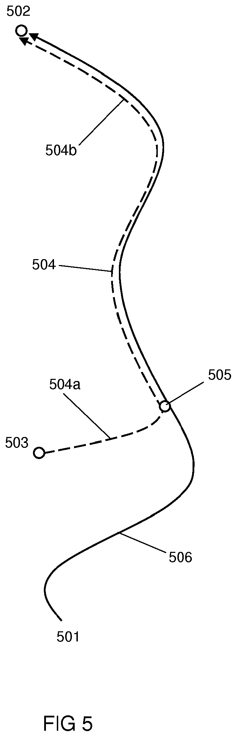

Im Folgenden wird die Erfindung Bezug nehmend auf **Figur 5** näher beschrieben, welche eine Draufsicht auf eine erste Route 501 zum Erläutern einer weiteren Ausführungsform des erfindungsgemäßen Verfahrens zeigt.

Das Verfahren wird unter Verwendung der Navigationsanordnung ausgeführt, welche Bezug nehmend auf Figur 4 beschrieben wurde.

Bei einem ersten Verfahrensschritt wird der Routenverlauf der ersten Route 501, die von der ersten Navigationseinrichtung bis zum Erreichen einer Routenendposition 502 zurückgelegt wird, unter Verwendung der Positionsbestimmungseinheit der ersten Navigationseinrichtung erfasst.

Dazu wird genauso vorgegangen wie beim Erfassen des Routenverlaufs der in Figur 4 gezeigten ersten Route 401.

Ferner wird bei einem zweiten Verfahrensschritt der Routenverlauf der ersten Route 501 unter Verwendung der Datensendeeinheit der ersten Navigationseinrichtung und der Datenempfangseinheit der zweiten Navigationseinrichtung von der ersten Navigationseinrichtung an die zweite Navigationseinrichtung übertragen.

Dazu wird genauso vorgegangen wie beim Übertragen des Routenverlaufs der in Figur 4 gezeigten ersten Route 401.

Weiterhin wird bei einem dritten Verfahrensschritt unter Verwendung der Positionsbestimmungseinheit eine Position 503 der zweiten Navigationseinrichtung ermittelt.

Dazu wird genauso vorgegangen wie beim Bestimmen der in Figur 4 gezeigten Position 403 der zweiten Navigationseinrichtung.

Bei einem vierten Verfahrensschritt wird unter Verwendung der Recheneinheit der zweiten Navigationseinrichtung eine zweite Route 504, welche von der aktuellen Position 503 der zweiten Navigationseinrichtung zu der Routenendposition 502 verläuft, anhand des Routenverlaufs der ersten Route 501 bestimmt.

Im Unterschied zu der in Figur 4 gezeigten zweiten Route 404 verläuft die zweite Route 504 nur teilweise auf der ersten Route 501. Das ist darauf zurückzuführen, dass sich die zweite Navigationseinrichtung nicht auf der ersten Route 501 befindet. Eine solche Situation tritt beispielsweise dann ein, wenn das Folgefahrzeug von einer Route, auf welcher das Folgefahrzeug dem Führungsfahrzeug gefolgt war, abgewichen ist.

Im Einzelnen verläuft ein erster Routenabschnitt 504a der zweiten Route 504 von der Position 503 bis zu einem Punkt 505 auf der ersten Route 501 und ein zweiter Routenabschnitt 504b der zweiten Route 504 verläuft von dem Punkt 505 auf der ersten Route 501 bis zu der Routenendposition 502. Der erste Routenabschnitt 504a repräsentiert den schnellsten Weg von der Position 503 zu der ersten Route 501. Alternativ dazu kann der erste Routenabschnitt auch den kürzesten Weg oder den effektivsten Weg von der Position 503 zu der ersten Route 501 repräsentieren.

Als eine andere Alternative kann der erste Routenabschnitt auf dem schnellsten, kürzesten oder effektivsten Weg zu einem auf der ersten Route angeordneten Punkt führen, an welcher das Folgefahrzeug von einer Route, auf welcher das Folgefahrzeug dem Führungsfahrzeug gefolgt war, abgewichen ist. In diesem Fall verläuft der zweite Routenabschnitt von dem Punkt auf der ersten Route bis zu der Routenendposition
Als eine weitere Alternative kann der erste Routenabschnitt auf dem schnellsten, kürzesten oder effektivsten Weg zur Routenstartposition der ersten Route führen. In diesem Fall verläuft der zweite Routenabschnitt von der Routenstartposition auf der ersten Route bis zu der Routenendposition.

Als eine zusätzliche Alternative kann der erste Routenabschnitt auf dem schnellsten, kürzesten oder effektivsten Weg zu einem Startpunkt führen, an dem das Führungsfahrzeug seine Fahrt begonnen hat. In diesem Fall verläuft ein zweiter Routenabschnitt von dem Startpunkt bis zur Routenstartposition der ersten Route und ein dritter Routenabschnitt verläuft von der Routenstartposition auf der ersten Route bis zu der Routenendposition. Es ist möglich, dass auch der zweite Routenabschnitt auf einer Route verläuft, die von dem Führungsfahrzeug zwischen dem Startpunkt und der Routenstartposition zurückgelegt wurde.

Da die zweite Route 504 teilweise auf der ersten Route 501 verläuft, lässt sich die zweite Route 504 mit besonders geringem Aufwand bestimmen. Das liegt daran, dass der auf der ersten Route 501 verlaufende zweite Routenabschnitt 504b der zweiten Route 504 vergleichsweise einfach bestimmbar ist, nämlich, indem die erste Route 501 um ihren bis vor den Punkt 505 verlaufenden Routenabschnitt 506 verkürzt wird.

Nach dem Bestimmen der zweiten Route 504 können von der Navigationsanordnung weitere Aktivitäten ausgeführt werden, welche den Aktivitäten entsprechen, die Bezug nehmend auf Figur 4 als nach dem Bestimmen der zweiten Route 404 ausführbare Aktivitäten beschrieben wurden.

## Patentansprüche

1. Verfahren zum Bestimmen einer Route unter Verwendung einer ersten Navigationseinrichtung (101, 201), die eine erste Positionsbestimmungseinheit und eine Datensendeeinheit aufweist, und einer zweiten Navigationseinrichtung (102, 202), die eine zweite Posftionsbestimmungseinheit, eine Recheneinheit und eine Dätenempfangseinheit aufweist, mit den folgenden Schritten:
a) Erfassen des Routenverlaufs einer ersten Route (401, 501), die von der ersten Navigationseinrichtung (101, 201) bis zu einer Routenendposition (402, 502) zurückgelegt wurde, unter Verwendung der ersten Positionsbestimmungseinheit, wobei die Position nur als Routenendposition definiert wird, wenn die folgenden Kriterien i) und ii) erfüllt sind:
i) seit der fetzten Inbetriebnahme der ersten Navigationseinrichtung wurden mindestens m Positionen ermittelt,
ii) wenn seit der letzten Inbetriebnahme der ersten Navigationseinrichtung eine Routenendposition identifiziert wurde, wurden seit dem letzten Identifizieren einer Routenendposition n weitere Positionen ermittell wobei n und m ganze Zahlen sind und n kleiner als m gewählt wird,
b) Übertragen des Routenverlaufs von der ersten Navigationseinrichtung (101, 201) an die zweite Navigationseinrichtung (102, 202) unter Verwendung der Datensendeeinheit und der Datenempfangseinheil wobei der Routenverlauf aus m Positionen besteht;
c) Ermitteln einer aktuellen Position (403, 503) der zweiten Navigationseinrichtung (102, 202) unter Verwendung der zweiten Positionsbestimmungseinheit und
d) Bestimmen einer zweiten Route (404, 504), welche von der Position der zweiten Navigationseinrichtung zu der Routenendposition (402, 502) verläuft, anhand des Routenverlaufs unter Verwendung der Recheneinheit, so dass die zweite Route (404, 504) zumindest teilweise auf der ersten Route (401, 501) verläuft, wobei die Schritte a) bis d) für eine weitere Routenendposition erneut ausgeführt werden, wobei der Routenverlauf der ersten Route (401, 501) von einem beim erneuten Ausführen von Schritt a) erfassten Routenverlauf einer weiteren ersten Route überlappt wird, da n kleiner als m gewählt wird.

2. Verfahren gemäß Anspruch 1,
bei dem der Routenverlauf von der ersten Navigationseinrichtung (201) zu einem Server (203) übertragen wird und der Routenverlauf von dem Server (203) an die zweite Navigationseinrichtung (202) weitergeleitet wird.

3. Verfahren gemäß einem der Ansprüche 1 und 2,
bei dem die erste Navigationseinrichtung (101, 201) zu einem Führungsfahrzeug einer Fahrzeugkolonne gehört und die zweite Navigationseinrichtung (201, 202) zu einem ersten Folgefahrzeug der Fahrzeugkolonne gehört.

4. Verfahren gemäß Anspruch 3,
bei dem, wenn festgestellt wird, dass das erste Folgefahrzeug ein gemeinsames Ziel früher als das Führungsfahrzeug erreichen kann, die Führung der Fahrzeugkolonne von dem Führungsfahrzeug an das erste Folgefahrzeug übergeben wird, so dass die erste Navigationseinrichtung (101, 201) die Funktion der zweiten Navigationseinrichtung (102, 202) übernimmt und die zweite Navigationseinrichtung (102, 202) die Funktion der ersten Navigationseinrichtung (101, 201) übernimmt.

5. Verfahren gemäß einem Anspruch 3,
bei dem ein zweites Folgefahrzeug zu der Fahrzeugkolonne gehört und der Fahrer des ersten Folgefahrzeugs das zweite Folgefahrzeug als Fahrzeug, dem er folgen will, auswählt, so dass eine Navigationseinrichtung des zweiten Folgefahrzeugs die Funktion der ersten Navigationseinrichtung (101, 201) bei dem Verfahren gemäß Anspruch 1 übernimmt.

6. Verfahren gemäß Anspruch 3,
bei dem die erste Navigationseinrichtung (101, 201) eine Aufforderung an die zweite Navigationseinrichtung (102, 202) überträgt, dass das erste Folgefahrzeug dem Führungsfahrzeug folgen soll, und die zweite Route (404, 504) nur dann bestimmt wird, wenn die Aufforderung von dem Folgefahrzeug oder von einem Fahrer des ersten Folgefahrzeugs angenommen wird.

7. Verfahren gemäß einem der vorhergehenden Ansprüche,
bei dem die erste Navigationseinrichtung (101, 201) einen Punkt von Interesse an die zweite Navigationseinrichtung (102, 202) überträgt, wobei der Punkt von Interesse manuell, von einem Benutzer der ersten Navigationseinrichtung (101, 201), oder automatisch, durch Aktivieren eines Fahrerassistenzsystems oder einer Sicherheitsfunktion eines Fahrzeugs, erzeugt wurde.

8. Verfahren gemäß einem der vorhergehenden Ansprüche,
bei dem die zweite Route (404, 504) nur dann bestimmt wird, wenn die erste Navigationseinrichtung (101, 201) ein manuell oder automatisch erzeugtes Startsignal an die zweite Navigationseinrichtung (102, 202) übertragen hat.

9. Verfahren gemäß einem der vorhergehenden Ansprüche,
bei dem die Position (503) der zweiten Navigationseinrichtung (102, 202) abseits der ersten Route (501) angeordnet ist und die zweite Route (504) die Position (503) der zweiten Navigationseinrichtung (102, 202) auf dem kürzesten, schnellsten oder effektivsten Weg mit der ersten Route (501) verbindet.

10. Navigationsanordnung (100, 200), welche aufweist:
eine erste Navigationseinrichtung (101, 201) mit einer ersten Positionsbestimmungseinheit, die zum Erfassen des Routenverlaufs einer ersten Route (401, 501), die von der ersten Navigationseinrichtung bis zu einer Routenendposition (402, 502) zurückgelegt wurde, eingerichtet ist, wobei die Position nur als Routenendposition definiert wird, wenn die folgenden Kriterien i) und ii) erfüllt sind:
i) seit der letzten Inbetriebnahme der ersten Navigationseinrichtung wurden mindestens m Positionen ermittelt,
ii) wenn seit der letzten Inbetriebnahme der ersten Navigationseinrichtung eine Routenendposition identifiziert wurde, wurden seit dem letzten Identifizieren einer Routenendposition n weitere Positionen ermittelt,
wobei n und m ganze Zahlen sind und n kleiner als m gewählt wird, und einer Datensendeeinheit, die zum Senden des Routenverlaufs der ersten Route (401, 501) von der ersten Navigationseinrichtung (101, 201) an eine zweite Navigationseinrichtung (102, 202) eingerichtet ist, wobei der Routenverlauf aus m Positionen besteht, und
eine zweite Navigationseinrichtung (102, 202) mit einer Datenempfangseinheit, die zum Empfangen des Routenverlaufs der ersten Route (401, 501) eingerichtet ist, einer zweiten Positionsbestimmungseinheit, die zum Ermitteln einer aktuellen Position (403, 503) der zweiten Navigationseinrichtung (102, 202) eingerichtet ist, und einer Recheneinheit, die zum Bestimmen einer zweiten Route (404, 504), welche von der Position (403, 503) der zweiten Navigationseinrichtung (102, 202) zu der Routenendposition (402, 502) verläuft, anhand des Routenverlaufs der ersten Route (401, 501), so dass die zweite Route (404, 504) zumindest teilweise auf der ersten Route (501, 504) verläuft, eingerichtet ist, wobei
die erste Positionsbestimmungseinheit zum Erfassen des Routenverlaufs einer weiteren ersten Route, die von der ersten Navigationseinrichtung (100, 200) bis zu einer weiteren Routenendposition zurückgelegt wurde, eingerichtet ist, wobei die weitere Routenendposition nur definiert wird, wenn die Kriterien i) und ii) erfüllt sind, und der Routenverlauf der ersten Route (401, 501) vom Routenverlauf der weiteren ersten Route überlappt wird, da n kleiner als m gewählt wird,
die Datensendeeinheit zum Senden des Routenverlaufs der weiteren ersten Route von der ersten Navigationseinrichtung (101, 201) an die zweite Navigationseinrichtung (102, 202) eingerichtet ist,
die Datenempfangseinheit zum Empfangen des Routenverlaufs der weiteren ersten Route eingerichtet ist,
die zweite Positionsbestimmungseinheit zum Ermitteln einer weiteren Position der zweiten Navigationseinrichtung (102, 202) eingerichtet ist und
die Recheneinheit zum Bestimmen einer weiteren zweiten Route, welche von der weiteren Position der zweiten Navigationseinrichtung (102, 202) zu der weiteren Routenendposition verläuft, anhand des Routenverlaufs der weiteren ersten Route, so dass die weitere zweite Route zumindest teilweise auf der weiteren ersten Route verläuft, eingerichtet ist.

## Claims

1. Method for determination of a route using a first navigation device (101, 201), which has a first position determination unit and a data transmission unit, and a second navigation device (102, 202), which has a second position determination device, a calculation unit and a data reception unit, comprising the following steps:
a) Capture of the routeing of a first route (401, 501), which has been travelled by the first navigation device (101, 201) up to a route end position (402, 502), using the first position determination unit, wherein the position is only defined as a route end position if the following criteria i) and ii) are met:
i) at least m positions have been determined since the last start-up of the first navigation device,
ii) if since the last start-up of the first navigation device a route end position has been identified, n further positions have been determined since the last identification of a route end position, wherein n and m are integers and n is chosen smaller than m,
b) Transmission of the routeing from the first navigation device (101, 201) to the second navigation device (102, 202) using the data transmission unit and the data reception unit, wherein the routeing consists of m positions;
c) Determination of a current position (403, 503) of the second navigation device (102, 202) using the second position determination unit and
d) Determination of a second route (404, 504), which runs from the position of the second navigation device to the route end position (402, 502), based on the routeing and using the calculation unit, so that the second route (404, 504) runs at least in part on the first route (401, 501),
wherein the steps a) to d) are executed again for a further route end position, wherein the routeing of the first route (401, 501) is overlapped by a routeing of a further first route acquired during a repeated execution of step a), because n is chosen smaller than m.

2. Method as claimed in Claim 1,
wherein the routeing is transmitted from the first navigation device (201) to a server (203) and the routeing is forwarded from the server (203) to the second navigation device (202).

3. Method as claimed in one of the Claims 1 and 2,
wherein the first navigation device (101, 201) belongs to a lead vehicle of a vehicle convoy and the second navigation device (201, 202) belongs to a first following vehicle of the vehicle convoy.

4. Method as claimed in Claim 3,
wherein, if it is determined that the first following vehicle is capable of reaching a joint destination earlier than the lead vehicle, leadership of the vehicle convoy is transferred from the lead vehicle to the first following vehicle, so that the first navigation device (101, 201) assumes the function of the second navigation device (102, 202) and the second navigation device (102, 202) assumes the function of the first navigation device (101, 201).

5. Method as claimed in Claim 3,
wherein a second following vehicle belongs to the vehicle convoy and the driver of the first following vehicle selects the second following vehicle as the vehicle he wishes to follow, so that a navigation device of the second following vehicle assumes the function of the first navigation device (101, 201) for the method as claimed in Claim 1.

6. Method as claimed in Claim 3,
wherein the first navigation device (101, 201) transmits a request to the second navigation device (102, 202) that the first following vehicle should follow the lead vehicle, and wherein the second route (404, 504) is only determined if the request is accepted by the following vehicle or by a driver of the first following vehicle.

7. Method as claimed in one of the previous claims,
wherein the first navigation device (101, 201) transmits a point of interest to the second navigation device (102, 202), wherein the point of interest has been generated manually, by a user of the first navigation device (101, 201), or automatically, by means of activation of a driver assistance system or a safety function of a vehicle.

8. Method as claimed in one of the previous claims,
wherein the second route (404, 504) is only determined if the first navigation device (101, 201) has transmitted a manually or automatically generated start signal to the second navigation device (102, 202).

9. Method as claimed in one of the previous claims,
wherein the position (503) of the second navigation device (102, 202) is located away from the first route (501) and the second route (504) connects the position (503) of the second navigation device (102, 202) via the shortest, fastest or most effective path with the first route (501).

10. Navigation arrangement (100, 200), which comprises:
a first navigation device (101, 201), which has a first position determination unit, which is set up to acquire the routeing of a first route (401, 501), which has been travelled by the first navigation device up to a route end position (402, 502), wherein the position is only defined as a route end position if the following criteria i) and ii) are satisfied:
i) at least m positions have been determined since the last start-up of the first navigation device,
ii) if since the last start-up of the first navigation device a route end position has been identified, n further positions have been determined since the last identification of a route end position, wherein n and m are integers and n is chosen smaller than m,
and a data transmission unit, which is set up to transmit the routeing of the first route (401, 501) from the first navigation device (101, 201) to a second navigation device (102, 202), wherein the routeing consists of m positions, and
a second navigation device (102, 202), which has a data reception unit, which is set up to receive the routeing of the first route (401, 501), a second position determination unit, which is set up to determine a current position (403, 503) of the second navigation device (102, 202), and a calculation unit, which is set up for determination of a second route (404, 504), which runs from the position (403, 503) of the second navigation device (102, 202) to the route end position (402, 502), based on the routeing of the first route (401, 501), so that the second route (404, 504) runs at least in part on the first route (501, 504),
wherein the first position determination unit is set up for acquisition of the routeing of a further first route, which has been travelled by the first navigation device (100, 200) up to a further route end position, wherein the further route end position is only defined if the criteria i) and ii) are satisfied and wherein the routeing of the first route (401, 501) is overlapped by the routeing of the further first route because n is chosen smaller than m,
the data transmission unit is set up for transmission of the routeing of the further first route from the first navigation device (101, 201) to the second navigation device (102, 202),
the data reception unit is set up for reception of the routeing of the further first route,
the second position determination unit is set up for determination of a further position of the second navigation device (102, 202), and
the calculation unit is set up for determination of a further second route, which runs from the further position of the second navigation device (102, 202) to the further route end position, based on the routeing of the further first route, so that the further second route runs at least in part on the further first route.

## Revendications

1. Procédé permettant de déterminer un itinéraire au moyen d'un premier dispositif de navigation (101, 201), comportant une première unité de définition de position et une unité d'émission de données, et d'un deuxième dispositif de navigation (102, 202), comportant une deuxième unité de définition de position, une unité de calcul et une unité de réception de données, le procédé étant constitué des étapes suivantes :
a) enregistrement du trajet d'un premier itinéraire (401, 501) parcouru depuis le premier dispositif de navigation (101, 201) jusqu'à une position de fin d'itinéraire (402, 502) au moyen de la première unité de définition de position, la position étant définie comme position de fin d'itinéraire uniquement si les critères suivants i) et ii) sont remplis :
i) au moins m positions ont été déterminées depuis la dernière mise en service du premier dispositif de navigation,
ii) si une position de fin d'itinéraire a été identifiée depuis la dernière mise en service du premier dispositif de navigation, n positions supplémentaires ont été déterminées depuis la dernière détermination d'une position de fin d'itinéraire, n et m étant des nombres entiers et la valeur n choisie étant plus petite que la valeur m,
b) transmission du trajet de l'itinéraire du premier dispositif de navigation (101, 201) au deuxième dispositif de navigation (102, 202) au moyen de l'unité d'émission de données et de l'unité de réception de données, le trajet de l'itinéraire comptant m positions,
c) détermination d'une position actuelle (403, 503) du deuxième dispositif de navigation (102, 202) au moyen de la deuxième unité de définition de position et
d) détermination d'un deuxième itinéraire (404, 504) menant de la position du deuxième dispositif de navigation à la position de fin d'itinéraire (402, 502), au moyen du trajet de l'itinéraire et de l'unité de calcul, de sorte que le deuxième itinéraire (404, 504) suit au moins partiellement le premier itinéraire (401, 501),
les étapes a) à d) étant réexécutées pour une position de fin d'itinéraire supplémentaire, avec un chevauchement entre le trajet du premier itinéraire (401, 501) et un trajet d'un premier itinéraire supplémentaire enregistré lors de la réexécution de l'étape a), la valeur n étant plus petite que la valeur m.

2. Procédé selon la revendication 1,
**caractérisé en ce que** le trajet d'itinéraire est transmis du premier dispositif de navigation (201) à un serveur (203) et que le trajet d'itinéraire est transmis du serveur (203) au deuxième dispositif de navigation (202).

3. Procédé selon l'une des revendications 1 et 2,
**caractérisé en ce que** le premier dispositif de navigation (101, 201) fait partie d'un véhicule menant d'un convoi de véhicules et que le deuxième dispositif de navigation (201, 202) fait partie d'un premier véhicule mené du convoi de véhicules.

4. Procédé selon la revendication 3,
**caractérisé en ce que**, s'il est constaté que le premier véhicule mené peut atteindre une destination commune plus tôt que le véhicule menant, la fonction de véhicule menant du convoi de véhicules est transférée du véhicule menant au premier véhicule mené de sorte que le premier dispositif de navigation (101, 201) reprend la fonction du deuxième dispositif de navigation (102, 202) et que le deuxième dispositif de navigation (102, 202) reprend la fonction du premier dispositif de navigation (101, 201).

5. Procédé selon la revendication 3,
**caractérisé en ce qu'**un deuxième véhicule mené fait partie du convoi de véhicules et que le conducteur du premier véhicule mené choisit le deuxième véhicule mené comme véhicule qu'il veut suivre, de sorte qu'un dispositif de navigation du deuxième véhicule mené reprend la fonction du premier dispositif de navigation (101, 201) dans le procédé selon la revendication 1.

6. Procédé selon la revendication 3,
**caractérisé en ce que** le premier dispositif de navigation (101, 201) transmet une demande au deuxième dispositif de navigation (102, 202) pour que le premier véhicule mené suive le véhicule menant, et que le deuxième itinéraire (404, 504) est déterminé uniquement si la demande est acceptée par le véhicule mené ou par un conducteur du premier véhicule mené.

7. Procédé selon l'une des revendications précédentes,
**caractérisé en ce que** le premier dispositif de navigation (101, 201) transmet un point d'intérêt au deuxième dispositif de navigation (102, 202), le point d'intérêt ayant été généré manuellement, par un utilisateur du premier dispositif de navigation (101, 201), ou automatiquement, par activation d'un système d'aide à la conduite ou d'une fonction de sécurité d'un véhicule.

8. Procédé selon l'une des revendications précédentes,
**caractérisé en ce que** le deuxième itinéraire (404, 504) est déterminé uniquement si le premier dispositif de navigation (101, 201) a transmis un signal de départ généré manuellement ou automatiquement au deuxième dispositif de navigation (102, 202).

9. Procédé selon l'une des revendications précédentes,
**caractérisé en ce que** la position (503) du deuxième dispositif de navigation (102, 202) se trouve à l'écart du premier itinéraire (501) et que le deuxième itinéraire (504) relie la position (503) du deuxième dispositif de navigation (102, 202) au premier itinéraire (501) par le chemin le plus court, le plus rapide ou le plus efficace.

10. Configuration de navigation (100, 200), comportant :
un premier dispositif de navigation (101, 201) avec une première unité de définition de position configurée pour enregistrer le trajet d'un premier itinéraire (401, 501) parcouru depuis le premier dispositif de navigation (101, 201) jusqu'à une position de fin d'itinéraire (402, 502), la position étant définie comme position de fin d'itinéraire uniquement si les critères suivants i) et ii) sont remplis :
i) au moins m positions ont été déterminées depuis la dernière mise en service du premier dispositif de navigation,
ii) si une position de fin d'itinéraire a été identifiée depuis la dernière mise en service du premier dispositif de navigation, n positions supplémentaires ont été déterminées depuis la dernière détermination d'une position de fin d'itinéraire,
n et m étant des nombres entiers et la valeur n choisie étant plus petite que la valeur m,
et une unité d'émission de données configurée pour envoyer le trajet du premier itinéraire (401, 501) du premier dispositif de navigation (101, 201) à un deuxième dispositif de navigation (102, 202), le trajet d'itinéraire comptant m positions, et
un deuxième dispositif de navigation (102, 202) comportant une unité de réception de données configurée pour recevoir le trajet du premier itinéraire (401, 501), une deuxième unité de définition de position configurée pour déterminer une position actuelle (403, 503) du deuxième dispositif de navigation (102, 202), et une unité de calcul configurée pour déterminer un deuxième itinéraire (404, 504) menant de la position (403, 503) du deuxième dispositif de navigation (102, 202) à la position de fin d'itinéraire (402, 502), au moyen du trajet du premier itinéraire (401, 501), de sorte que le deuxième itinéraire (404, 504) suit au moins partiellement le premier itinéraire (501, 504),
la première unité de définition de position étant configurée pour enregistrer le trajet d'un premier itinéraire supplémentaire parcouru depuis le premier dispositif de navigation (100, 200) jusqu'à une position de fin d'itinéraire supplémentaire, la position de fin d'itinéraire supplémentaire étant définie uniquement si les critères i) et ii) sont respectés et que le trajet du premier itinéraire (401, 501) et le trajet du premier itinéraire supplémentaire se chevauchent, la valeur n choisie étant plus petite que la valeur m,
l'unité d'émission de données étant configurée pour envoyer le trajet du premier itinéraire supplémentaire du premier dispositif de navigation (101, 201) au deuxième dispositif de navigation (102, 202),
l'unité de réception de données étant configurée pour recevoir le trajet du premier itinéraire supplémentaire,
la deuxième unité de définition de position étant configurée pour déterminer une position supplémentaire du deuxième dispositif de navigation (102, 202), et
l'unité de calcul étant configurée pour déterminer un deuxième itinéraire supplémentaire menant de la position supplémentaire du deuxième dispositif de navigation (102, 202) à la position de fin d'itinéraire supplémentaire, au moyen du trajet du premier itinéraire supplémentaire, de sorte que le deuxième itinéraire supplémentaire suit au moins partiellement le premier itinéraire supplémentaire.
